(19) Europäisches Patentamt / European Patent Office / Office européen des brevets

(11) **EP 4 428 501 B1**

(12) **EUROPÄISCHE PATENTSCHRIFT**

(45) Veröffentlichungstag und Bekanntmachung des Hinweises auf die Patenterteilung:
**26.02.2025 Patentblatt 2025/09**

(21) Anmeldenummer: **23161323.3**

(22) Anmeldetag: **10.03.2023**

(51) Internationale Patentklassifikation (IPC):
**G01F 1/667** *(2022.01)* **G01F 1/66** *(2022.01)*

(52) Gemeinsame Patentklassifikation (CPC):
**G01F 1/662; G01F 1/667**

(54) **DURCHFLUSSMESSVORRICHTUNG**

FLOW RATE MEASURING DEVICE

DISPOSITIF DE MESURE DE DÉBIT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**11.09.2024 Patentblatt 2024/37**

(73) Patentinhaber: **SICK Engineering GmbH**
**01458 Ottendorf-Okrilla (DE)**

(72) Erfinder:
• **Künzelmann, Mario**
**01187 Dresden (DE)**
• **Schroeter, Gerry**
**01239 Dresden (DE)**
• **Ehrlich, Andreas**
**01129 Dresden (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
EP-B1- 0 790 490    WO-A1-2011/029261
CN-A- 102 322 906    DE-T5- 112017 006 535
GB-A- 2 238 615    US-A- 5 136 882
US-B2- 10 845 224

**EP 4 428 501 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Durchflussmessvorrichtung zum Messen eines Parameters, insbesondere um aus dem Parameter eine Durchflussmenge zu ermitteln. Der Parameter wird an einer aus einem Fluid gebildeten Strömung gemessen, wobei die Durchflussmessvorrichtung einen Durchflussraum mit einem Zuflussabschnitt und einem Abflussabschnitt sowie einen zwischen dem Zuflussabschnitt und dem Abflussabschnitt angeordneten Messabschnitt umfasst. Dabei definiert der Messabschnitt eine Transportrichtung, wobei in dem Messabschnitt zumindest eine Ultraschalleinrichtung zum Aussenden und/oder Empfangen von Ultraschallwellen angeordnet ist.

Derartige Durchflussmessvorrichtungen werden beispielsweise in Rohrleitungen eingesetzt, um das durch die Rohrleitung fließende Volumen (d.h. die Durchflussmenge) des in der Rohrleitung transportierten Fluids zu bestimmen. Bei dem Fluid kann es sich beispielsweise um eine Flüssigkeit, wie Wasser, aber auch um Gase, wie beispielsweise Erdgas, handeln.

Aufgrund der z.B. in Pipelines transportierten sehr hohen Mengen und des Preises des transportierten Fluids, ist es für solche Durchflussmessvorrichtungen von besonderer Bedeutung, eine hohe Messgenauigkeit zu erzielen.

Die hierin beschriebenen Durchflussmessvorrichtungen nutzen als Messprinzip das Emittieren von Ultraschallwellen durch das Fluid hindurch. Es ist bekannt, die Ultraschallwellen schräg zur Flussrichtung des Fluids durch das Fluid zu senden und eine Laufzeitdifferenz zwischen Hin- und Rückweg entlang desselben Pfades zu bestimmen. Anhand des Laufzeitunterschieds lässt sich dann die Fließgeschwindigkeit des Fluids bestimmen. Der Messeffekt basiert dabei auf dem Phänomen, dass ein mit der Strömungsrichtung gesendetes Ultraschallsignal eine kürzere Laufzeit aufweist, als ein entgegengesetzt der Strömungsrichtung ausgesendetes Signal. Aus der Fließgeschwindigkeit kann letztlich aufgrund des bekannten Querschnitts der Durchflussmessvorrichtung das durch die Durchflussmessvorrichtung pro Zeiteinheit fließende Volumen ermittelt werden.

Um die Ultraschallsignale schräg zur Flussrichtung des Fluids durch das Fluid senden zu können, müssen die Transducer zum Senden und Empfangen der Ultraschallsignale ebenfalls schräg zur Flussrichtung und überdies entlang der Flussrichtung beabstandet zueinander angeordnet sein. Hierdurch entsteht eine relativ große Länge der Durchflussmessvorrichtung, welche zwingend vorhanden sein muss.

Überdies muss herkömmlicherweise ein erheblicher Aufwand betrieben werden, um die Strömung des Fluids möglichst homogen zu formen. Eine homogene Strömung ist üblicherweise notwendig, um die geforderte hohe Genauigkeit der Messung zu erreichen. Das Homogenisieren der Strömung kann beispielsweise durch sogenannte "Flow Conditioner" erreicht werden, die Turbulenzen oder schräg zur Flussrichtung verlaufende Strömungen reduzieren oder ganz verhindern. Solche Flow Conditioner sind üblicherweise in den Zulauf der Durchflussmessvorrichtung integriert, was die Länge des Zulaufs erhöht und auch die von der Durchflussmessvorrichtung insgesamt benötigte Länge weiter steigert.

DE 11 2017 006 535 T5 beschreibt ein Verfahren und eine Vorrichtung zum Messen des Durchflusses, wobei durch einen in einem Messrohr angeordneten Tangentialströmungsgenerator ein entlang der axialen Richtung des Messrohrs linear strömendes Fluid an dem Tangentialströmungsgenerator vorbeiläuft und eine Richtungsvariierung erzeugt, um ein in der Umfangsrichtung rotierend strömendes Fluid zu erzeugen. Die US 5 136 882 A betrifft eine Vorrichtung mit einem Spiralrohr, wobei durch das Spiralrohr die innere Oberfläche der Vorrichtung sauber gehalten werden soll. Die CN 102 322 906 A lehrt eine Vorrichtung mit einer Strömungsumlenkungsmittel und Spiegeln zur Umlenkung eines Ultraschallsignals. Die US 10 845 224 B2 offenbart eine Vorrichtung zur Messung der Zusammensetzung mehrphasiger Fluide, z.B. Mischungen aus Wasser, Öl und Gas, wobei mehrere Schallpfade durch einen zentralen Punkt der Vorrichtung führen.

Es ist ersichtlich, dass herkömmliche Durchflussmessvorrichtungen große Einbaulängen aufweisen. Es ist daher eine der Erfindung zugrundeliegende Aufgabe, eine Durchflussmessvorrichtung der oben genannten Art anzugeben, die kompakter aufgebaut ist und trotzdem eine hohe Genauigkeit des Messergebnisses sicherstellt.

Diese Aufgabe wird durch eine Durchflussmessvorrichtung gemäß Anspruch 1 gelöst.

Die erfindungsgemäße Durchflussmessvorrichtung zeichnet sich dadurch aus, dass ein Strömungsumlenkungsmittel (bevorzugt zumindest in dem Zuflussabschnitt) angeordnet ist, welches ausgebildet ist, die Strömung derart umzulenken, dass die Strömung im Messabschnitt zumindest bereichsweise schräg zu der Transportrichtung verläuft. Zudem ist erfindungsgemäß die Ultraschalleinrichtung ausgebildet, die Ultraschallwellen in mehrere zumindest im Wesentlichen zu der Transportrichtung senkrechte Schallpfade durch das Fluid auszusenden und/oder die Ultraschallwellen aus mehreren zumindest im Wesentlichen zu der Transportrichtung senkrechten Schallpfaden aus dem Fluid zu empfangen.

Im Vergleich zu bekannten Durchflussmessvorrichtungen geht die Erfindung einen gänzlich neuen Weg. Anstelle der Erzeugung eines möglichst homogenen und geradlinigen Flusses durch die Messvorrichtung und der Schrägstellung der Transducer/Schallpfade gegenüber der Flussrichtung, wird erfindungsgemäß eine Querströmung erzeugt, welche dann mit nicht schräg gestellten Schallpfaden erfasst werden kann.

Damit verabschiedet sich die Erfindung komplett von dem üblicherweise verwendeten Grundprinzip, nach welchem die Strömung in der Durchflussmessvorrichtung möglichst homogen und geradlinig sein soll. Stattdessen wird erfindungsgemäß absichtlich eine Strömung erzeugt, die zumindest bereichsweise schräg zu der Transportrichtung verläuft. Diese quer zur Transportrichtung verlaufende Komponente kann dann mit den senkrecht auf der Transportrichtung stehenden Schallpfaden bzw. mit den entlang der Schallpfade ausgesandten Ultraschallwellen erfasst werden (da mit den Schallpfaden die Strömungskomponente erfasst werden kann, die senkrecht zur Transportrichtung verläuft). Wie unten noch genauer ausgeführt, ist die Transportrichtung insbesondere die Richtung, in welcher das Fluid transportiert wird und/oder in welcher das Fluid fließen würde, wenn die Durchflussmessvorrichtung keine Strömungsumlenkungsmittel aufweisen würde.

Entgegen der bisher herrschenden Meinung hat sich dabei überraschenderweise gezeigt, dass trotz der nicht geradlinig und homogen verlaufenden Strömung sehr genaue Messergebnisse erzielt werden können. Aufgrund des Umstands, dass die Schallpfade senkrecht zur Transportrichtung verlaufen, können auch die zur Erzeugung der Ultraschallwellen genutzten Transducer senkrecht zur Transportrichtung angebracht werden und müssen demnach nicht mehr entlang der Transportrichtung zueinander beabstandet sein. Die Länge der Durchflussmessvorrichtung entlang der Transportrichtung kann auf diese Weise sehr stark reduziert werden, was mit Durchflussmessvorrichtungen gemäß dem Stand der Technik bisher nicht möglich war.

Die Erfindung verlässt also völlig die bisher unangetastete Denkweise, dass die zu messende Strömung möglichst gleichförmig und entlang der Transportrichtung verlaufen soll, wofür Strömungsgleichrichter und lange Einlaufstrecken, etc. benötigt werden, und dass die zu messende Strömung möglichst nur axiale Komponenten haben soll, damit über die bisherigen, im Winkel liegenden Messpfade ausreichend genaue Messergebnisse erhalten werden. Erfindungsgemäß erhält die Strömung absichtlich z.B. einen Drall und damit allgemein gesprochen eine nicht-axiale Komponente, die dann mittels der senkrechten Schallpfade gemessen werden kann.

Überdies hat sich als weiterer Vorteil gezeigt, dass die erfindungsgemäße Durchflussmessvorrichtung sehr robust gegenüber Vorstörungen (d.h. Inhomogenitäten in der Strömung des Fluids) ist, da die Vorstörungen durch das Strömungsumlenkungsmittel zumindest deutlich reduziert werden.

Nachfolgend werden noch weitere Aspekte der Erfindung beschrieben.

Das zu messende Fluid strömt im Normalbetrieb zunächst durch den Durchflussabschnitt, wird von dem Durchflussabschnitt dann in den Messabschnitt geleitet und gelangt schließlich von dem Messabschnitt in den Abflussabschnitt. Der Zuflussabschnitt und der Abflussabschnitt können beispielsweise mit Rohrleitungen gekoppelt sein, aus welchen das Fluid in den Zuflussabschnitt strömt und in welche das Fluid aus dem Abflussabschnitt eingeleitet wird.

Der Zufluss- und Abflussabschnitt können beispielsweise Verbindungsmittel zur Verbindung der Durchflussmessvorrichtung mit der Rohrleitung (z.B. einer Pipeline) aufweisen, insbesondere in der Form eines Flansches mit Schraublöchern.

Der Zuflussabschnitt, der Messabschnitt und der Abflussabschnitt bilden zusammen den Durchflussraum, also den Raumbereich in der Messvorrichtung, der von dem Fluid durchflossen wird.

Insbesondere durch die Form des Messabschnitts, d.h. durch die Form des Durchflussraums im Messabschnitt (aber ggf. auch zusammen mit dem Zufluss- und dem Abflussabschnitt), ergibt sich die Transportrichtung. Die Transportrichtung ist insbesondere die Richtung, in welcher das Fluid transportiert wird und/oder in welcher das Fluid fließen würde, wenn die Durchflussmessvorrichtung keine Strömungsumlenkungsmittel aufweisen würde. Insbesondere kann der Messabschnitt aber auch der gesamte Durchflussraum durch ein gerades Rohr gebildet sein. In diesem Fall ist die Transportrichtung dann die Längsrichtung des Rohrs. Die Transportrichtung kann dementsprechend die Richtung sein, in welcher das Fluid in der Durchflussmessvorrichtung hauptsächlich fließt, um z.B. von dem Zuflussabschnitt zu dem Abflussabschnitt zu gelangen. Die Transportrichtung könnte dementsprechend auch als Hauptströmungsrichtung bezeichnet werden, also als die Strömungsrichtung die ohne die Strömungsablenkungsmittel vorliegen würde.

Durch die Strömungsumlenkungsmittel erhält das Fluid bzw. die Strömung des Fluids eine Komponente, welche nicht entlang der Transportrichtung verläuft, sondern zumindest bereichsweise schräg zur Transportrichtung. Der Winkel zwischen der Transportrichtung und der abgelenkten Strömung kann dabei zumindest 25°, 30° oder 40° betragen. Wie später noch genauer ausgeführt, kann das Strömungsumlenkungsmittel beispielsweise in dem Durchflussraum angeordnete Flügel aufweisen, welche das Fluid seitlich ablenken und so eine Art Drehung oder Drall in die Strömung einbringen. Die Komponente der Strömung, welche nicht nur entlang der Transportrichtung verläuft, kann dann mittels der erfindungsgemäß angeordneten Ultraschalleinrichtung gemessen werden.

Die abgelenkte Strömung kann insbesondere entlang der Transportrichtung gesehen einen Bogen oder einen Teilkreis beschreiben.

Grundsätzlich ist unter einer Strömung die gerichtete Bewegung eines Fluids zu verstehen.

Die Ultraschalleinrichtung umfasst zumindest einen Ultraschallsender und einen Ultraschallempfänger, welche auf gegenüberliegenden Enden eines der Schallpfade angeordnet sind. Gemäß der Erfindung werden an gegenüberliegenden Enden eines Schallpfads Einheiten angeordnet, welche Ultraschallsender und Ultraschallempfänger vereinen, also sogenannte Transducer. Die Ultraschalleinheit kann dementsprechend ein oder mehrere Paare von Transducern umfassen.

Insbesondere durch die Transducer kann die Laufzeit von Ultraschallwellen durch den Schallpfad auf einfache Weise einmal in der Hin-Richtung und einmal in der Rück-Richtung gemessen werden, um so eine Laufzeitdifferenz zu ermitteln, wie später noch genauer ausgeführt wird.

Wie erwähnt, steht der Schallpfad zumindest im Wesentlichen senkrecht auf der Transportrichtung, so dass zwei zu einem Schallpfad gehörende Transducer jeweils entlang der Transportrichtung gesehen an derselben Stelle angeordnet sind. Ein Beabstanden der Transducer entlang der Transportrichtung ist nicht notwendig. Erfindungsgemäß werden mehrere Schallpfade ausgebildet, die insbesondere zueinander parallel sind und bevorzugt in derselben Ebene liegen, wobei die Transportrichtung eine Normale auf diese Ebene bildet. Durch mehrere Schallpfade kann ein noch genaueres Messergebnis erzielt werden.

Sind in einem Schallpfad Strömungen vorhanden, die schräg zur Transportrichtung und zudem zumindest mit einer Komponente entlang des Schallpfads verlaufen, so verkürzt sich die Laufzeit durch den Schallpfad in einer Richtung und die Laufzeit verlängert sich in der entgegengesetzten Richtung. Der so entstehende eigentliche Messwert des Laufzeitunterschieds akkumuliert sich dabei über das hin- und rücklaufende Signal von Ultraschallwellen. Dabei kommt es erfindungsgemäß gerade nicht darauf an, dass der Winkel der Strömung zu dem Schallpfad überall entlang des Schallpfads identisch ist. Hier hat sich erfindungsgemäß nämlich überraschend gezeigt, dass, obwohl das Messsignal der Ultraschallwellen unterschiedliche Winkel durchläuft, die Auswertung mit einem einzigen (z.B. experimentell ermittelten) Winkel erfolgen kann, wobei dann trotzdem die Durchflussgeschwindigkeit und damit die Durchflussmenge sehr genau bestimmt werden können.

Für die Durchflussmessvorrichtung gemäß der Erfindung können die in Durchflussmessvorrichtungen des Stands der Technik verwendeten Komponenten ebenfalls verwendet werden. So können dieselben Ultraschalleinrichtungen verwendet werden, die erfindungsgemäß aber in einer anderen Lage eingebaut werden. Auch kann beispielsweise dieselbe Elektronik zur Auswertung verwendet werden, wobei sich die zur Auswertung verwendete Formel nur geringfügig ändert. Insgesamt kann die Durchflussmessvorrichtung der Erfindung z.B. aus bestehenden Baukastensystemen für Durchflussmessvorrichtungen aufgebaut werden, wodurch die Herstellung der Messvorrichtung einfach und kostengünstig erfolgen kann. Überdies ist von Vorteil, dass die Transducer der Ultraschalleinrichtung nicht schräg gestellt eingebaut werden müssen, sondern senkrecht. Dadurch ist es möglich, z.B. den Messabschnitt mit einer herkömmlichen dreiachsigen Fräsmaschine herzustellen, da die Bohrungen für die Transducer senkrecht zur Längsrichtung z.B. des für den Messabschnitt verwendeten Rohrs eingebracht werden können.

Erfindungsgemäß verlaufen die Schallpfade zumindest im Wesentlichen senkrecht zu der Transportrichtung. Dies kann insbesondere bedeuten, dass der oder die Schallpfade einen Winkel mit der Transportrichtung einschließen, welcher maximal 5°, bevorzugt maximal 3°, weiter bevorzugt maximal 1°, weiter bevorzugt maximal 0,5°, von einer Senkrechten auf die Transportrichtung abweicht. Geringe Abweichungen von der Senkrechten erlauben immer noch eine Messung nach dem der Erfindung zugrundeliegenden Messprinzip. Bevorzugt verlaufen die Schallpfade aber möglichst entlang/parallel zu der Senkrechten auf die Transportrichtung.

Vorteilhafte Ausgestaltungen der Erfindung sind der Beschreibung, den Zeichnungen sowie den Unteransprüchen zu entnehmen.

Gemäß einer ersten Ausführungsform verläuft zumindest einer der Schallpfade oder verlaufen alle Schallpfade außermittig in dem Messabschnitt. Außermittig kann in diesem Zusammenhang bedeuten, dass die Schallpfade außermittig bezüglich des Querschnitts des Messabschnitts verlaufen. Wenn der Messabschnitt beispielsweise rohrförmig, d.h. hohlzylinderförmig, ist, dann verläuft der Schallpfad oder die Schallpfade nicht durch den Mittelpunkt des Kreises, welcher den Querschnitt bildet. Bei einem rechteckigen Querschnitt verläuft der Schallpfad oder die Schallpfade nicht durch den Diagonalenschnittpunkt oder bei beliebigen Querschnitten nicht durch den Schwerpunkt des Querschnitts. Insbesondere kann die Normale auf den Querschnitt entlang der Hauptflussrichtung verlaufen.

Die außermittige Anordnung des Schallpfads oder der Schallpfade ist vorteilhaft, da bei einem Schallpfad, welcher durch den Mittelpunkt des Querschnitts verläuft, sich die Messeffekte beiderseits des Mittelpunkts aufheben können, so dass dort keine sinnvolle Laufzeitdifferenzmessung möglich ist.

Erfindungsgemäß sind mehrere zueinander parallele Schallpfade vorhanden. Durch mehrere Schallpfade kann an unterschiedlichen Positionen im Querschnitt des Messabschnitts gemessen werden. Zudem können mit mehreren Schallpfaden gleichzeitig Messungen durchgeführt werden. Beide Aspekte erlauben es, insgesamt die Durchflussmenge mit höherer Genauigkeit zu ermitteln. Insbesondere erhöht sich die Genauigkeit mit steigender Anzahl Schallpfade mit der Wurzel aus der Anzahl der Schallpfade.

Gemäß einer weiteren Ausführungsform sind zumindest zwei, insbesondere in der Projektion auf den Querschnitt des Messabschnitts senkrecht zueinander verlaufende, Schallpfade vorhanden. Zueinander senkrechte Schallpfade erlauben das Anordnen größerer Transducer, wie sie beispielsweise für Messungen in flüssigen Medien notwendig sind. Auf diese Weise kann die Durchflussmessvorrichtung weiter verkleinert werden. Die senkrecht zueinander verlaufenden Schallpfade können sich schneiden oder getrennt voneinander verlaufen.

Gemäß einer weiteren Ausführungsform weist das Strömungsumlenkungsmittel in dem Durchflussraum angeordnete Umlenkflächen auf. Die Umlenkflächen können insbesondere in den Durchflussraum hineinragen und/oder den Durchflussraum begrenzen. Insbesondere befindet sich das Strömungsumlenkungsmittel zumindest zum Teil in dem Zuflussabschnitt.

Die Umlenkflächen können bevorzugt quer zur Transportrichtung angeordnet sein. Bei den Umlenkflächen kann es sich beispielsweise um die Flächen eines Innengewindes einer Rohrleitung handeln. Die Flächen des Innengewindes können dabei übermäßig groß ausgebildet sein. Alternativ oder zusätzlich können die Umlenkflächen eine Platte mit schräg eingebohrten Löchern umfassen, wobei die Löcher das Fluid quer zur Transportrichtung ablenken.

Bevorzugt weisen die Umlenkflächen zumindest bereichsweise einen Winkel zur Transportrichtung von zumindest 25°, 30° oder 40° auf. Der Winkel kann insbesondere auch kleiner als 60°, 70° oder 75° sein. Durch derart in einem Winkel angeordnete Strömungsumlenkungsmittel kann die Strömung nach dem Leiten durch die Strömungsumlenkungsmittel einen ähnlichen Winkel zur Transportrichtung aufweisen.

Bevorzugt sind sämtliche hierin genannten Varianten des Strömungsumlenkungsmittels unbewegliche Strömungsumlenkungsmittel. Dies bedeutet, die Strömungsumlenkungsmittel sind fest in der Durchflussmessvorrichtung verbaut.

Gemäß einer weiteren Ausführungsform weist das Strömungsumlenkungsmittel zumindest einen Drallgenerator mit mehreren Flügeln auf, wobei sich die Flügel von einem zentralen Verbindungsabschnitt zur Wand des Durchflussraums erstrecken. Der Verbindungsabschnitt kann sich insbesondere zentral im Querschnitt des Durchflussraums befinden. Die Flügel können sich dann radial von dem Verbindungsabschnitt zu der den Durchflussraum begrenzenden Wandung hin erstrecken. Die Flügel sind bevorzugt zur Transportrichtung schräg gestellt und leiten die Strömung so in einer Richtung quer zur Transportrichtung, bevorzugt (bei einem runden Querschnitt) tangential zu dem Querschnitt. Das Strömungsumlenkungsmittel kann beispielsweise zwei, drei, vier, fünf, sechs, sieben, acht, neun oder zehn Flügel aufweisen. Es können auch noch mehr Flügel vorgesehen sein, beispielsweise zumindest 15, 18 oder 20. Durch eine so hohe Zahl von Flügeln kann eine bessere Strömungsführung bei der Umlenkung erzielt werden. Maximal können z.B. 30 oder 40 Flügel vorgesehen sein.

Gemäß einer weiteren Ausführungsform beginnen und enden die Flügel entlang der Transportrichtung gesehen jeweils an derselben Position. Bevorzugt besitzen die Flügel jeweils eine sich entsprechende Geometrie. Die Flügel können also allesamt identisch zueinander ausgebildet sein. Zudem können die Flügel allesamt den gleichen Anstellwinkel, d.h. den gleichen Winkel zur Transportrichtung, das gleiche Profil und/oder das gleiche Material, etc. aufweisen. Die Flügel können auch eine sich entlang der Transportrichtung verändernde Neigung aufweisen. Die hierin genannten Winkelangaben können sich insbesondere auf die stärkste Neigung eines jeden Flügels beziehen.

Durch die Flügel bzw. allgemein durch das Strömungsumlenkungsmittel kann, entlang der Transportrichtung gesehen, mehr als 50 %, bevorzugt mehr als 70 %, besonders bevorzugt mehr als 90 % der Fläche des Querschnitts von den Flügeln bzw. von dem Strömungsumlenkungsmittel bedeckt sein. Die Fläche kann insbesondere dadurch ermittelt werden, dass das Strömungsumlenkungsmittel entlang der Transportrichtung auf eine Querschnittsebene des Messabschnitts projiziert wird. Durch diese relativ hohe Bedeckung kann sichergestellt werden, dass nahezu sämtliches Fluid von dem Strömungsumlenkungsmittel abgelenkt wird und so beispielsweise keine Turbulenzen in der Strömung entstehen.

Gemäß einer weiteren Ausführungsform reduziert das Strömungsumlenkungsmittel den Durchflussquerschnitt (an der Position des Strömungsumlenkungsmittels) um weniger als 15 %, bevorzugt um weniger als 10 % oder weniger als 3 %. Das Strömungsumlenkungsmittel kann also relativ dünn und strömungsgünstig geformt sein, so dass der Durchflussquerschnitt nur minimal reduziert wird. Dies kann sich in der Praxis in einem sehr geringen Druckverlust äußern. Der Druckverlustbeiwert $\zeta$ kann so beispielsweise bei 1,5 liegen, was einem Druckverlust von lediglich etwa zwei 90°-Krümmungen in einem Rohr entspricht. Trotz der Ablenkung des Fluids durch das Strömungsumlenkungsmittel kann also ein sehr geringer Druckverlust erzielt werden.

Gemäß einer weiteren Ausführungsform ist das Strömungsumlenkungsmittel ausgebildet, die Strömung derart umzulenken, dass die umgelenkte Strömung zumindest im Wesentlichen achsensymmetrisch um eine entlang der Transportrichtung verlaufende Achse ist. Beispielsweise bei dem vorgenannten Drallgenerator mit Flügeln kann der Verbindungsabschnitt entlang dieser Achse angeordnet sein. Nach dem Strömungsumlenkungsmittel kann die abgelenkte Strömung um diese Achse herum strömen.

Der Drallgenerator und auch allgemein das Strömungsumlenkungsmittel kann dementsprechend rotationssymmetrisch um eine zentrale Achse des Durchflussraums ausgebildet sein.

Gemäß einer weiteren Ausführungsform ist ein Strömungsrücklenkungsmittel vorhanden, welches bevorzugt in dem Abflussabschnitt angeordnet ist, wobei das Strömungsrücklenkungsmittel ausgebildet ist, die (aus dem Messabschnitt kommende) abgelenkte Strömung nochmals so abzulenken, dass die Strömung zumindest im Wesentlichen parallel zu der Transportrichtung verläuft oder zumindest in Richtung einer Strömung parallel zur Transportrichtung abgelenkt wird. Das Strömungsrücklenkungsmittel kann also dazu dienen, dass nach dem Abflussabschnitt wieder eine homogene und geradlinig verlaufende Strömung vorliegt. Es versteht sich, dass die Strömung nach dem Abflussabschnitt nicht im mathematischen Sinne parallel und geradlinig verlaufen muss. Es können auch weiterhin kleine Verwirbelungen oder geringe Querströme vorhanden sein.

Gemäß einer weiteren Ausführungsform entspricht das Strömungsrücklenkungsmittel dem Strömungsumlenkungsmittel, wobei das Strömungsrücklenkungsmittel und das Strömungsumlenkungsmittel bevorzugt Gleichteile sind. Durch die Verwendung von Gleichteilen können die Produktionskosten für die Durchflussmessvorrichtung gesenkt werden. Überdies hat sich gezeigt, dass durch die Verwendung von gleichen Strömungsumlenkungs- und Strömungsrücklenkungsmitteln nach der Durchflussmessvorrichtung eine relativ homogene und geradlinig fließende Strömung erzeugt werden kann.

Bevorzugt ist die Durchflussmessvorrichtung ausgebildet, unabhängig von der Strömungsrichtung den Parameter zu messen. Dies bedeutet, das Fluid kann sowohl durch den Zuflussabschnitt als auch durch den Abflussabschnitt in die Messvorrichtung eingeleitet werden. Hierzu kann die Messvorrichtung insbesondere bezüglich des Strömungsumlenkungs- und Strömungsrücklenkungsmittels und bevorzugt auch bezüglich der Form des Durchflussraums symmetrisch ausgebildet sein, so dass die Durchflussmessvorrichtung bidirektional einsetzbar ist. Anders ausgedrückt ist die Durchflussmessvorrichtung zumindest bezüglich der mit dem Fluid in Kontakt kommenden Komponenten symmetrisch ausgebildet. Die Symmetrie kann dabei insbesondere bezüglich einer Ebene vorhanden sein, in welcher die Schallpfade verlaufen.

Insbesondere durch den Einsatz der Gleichteile für das Strömungsumlenkungs- und das Strömungsrücklenkungsmittel kann die Vorrichtung sowohl in Transportrichtung als auch entgegen dieser Richtung betrieben werden. Die Messvorrichtung kann also richtungsunabhängig in bestehende Rohrleitungen eingebaut werden.

Gemäß einer weiteren Ausführungsform umfasst das Strömungsumlenkungsmittel zumindest eine schräg oder quer zur Transportrichtung in den Durchflussraum mündende Zuleitung, durch welche ein Fluid in den Durchflussraum einbringbar ist.

Alternativ oder zusätzlich zu den vorgenannten Umlenkflächen kann das Strömungsumlenkungsmittel also auch auf einem ganz anderen Prinzip basieren, nämlich auf dem Einleiten eines Fluids quer oder schräg zur Transportrichtung, wodurch dann letztlich eine Strömung im Messabschnitt erzeugt wird, die zumindest bereichsweise schräg zu der Transportrichtung verläuft. Die Position der Einmündung der Zuleitung ist insbesondere außermittig, bei einem runden Querschnitt bevorzugt tangential. Weiter bevorzugt können zwei Zuleitungen vorgesehen sein, welche auf gegenüberliegenden Seiten des Durchflussraums liegen. Bei mehreren Zuleitungen können die Zuleitungen entlang der Transportrichtung beabstandet zueinander angeordnet sein.

Das eingeleitete Fluid kann entweder das zu messende Fluid sein, von welchem beispielsweise ein Teil vorab abgezweigt wurde und welches durch die Zuleitung dann wieder in den Durchflussraum gelangt. Im Durchflussraum kann sich dieses abgezweigte Fluid dann mit dem (restlichen) nicht abgezweigten Fluid mischen. Ebenfalls wäre es möglich, sämtliches zu messendes Fluid abzuzweigen und beispielsweise durch zwei Zuleitungen dann wieder in den Durchflussraum einzubringen. Weiter alternativ oder zusätzlich kann es sich bei dem durch die Zuleitung eingebrachten Fluid aber auch um ein zusätzliches Fluid handeln, beispielsweise Druckluft.

Als weitere oder zusätzliche Alternative zur Ausbildung des Strömungsumlenkungsmittels kann auch eine Raumkrümmung z.B. des Zulaufabschnitts dienen. Das Strömungsumlenkungsmittel kann dementsprechend eine Einzel- oder eine Doppelkrümmung umfassen. Die Krümmungen können jeweils 90°-Krümmungen sein, welche z.B. einen Radius mit der Größe des Durchmessers des Zulaufabschnitts umfassen. Bei einer Krümmung bzw. Doppelkrümmung entsteht ebenfalls jeweils eine Strömung, die quer zur Transportrichtung verläuft, welche dann wieder durch die senkrecht verlaufenden Schallpfade gemessen werden kann.

Sämtliche hierin genannten Strömungsumlenkungsmittel können insbesondere eine zirkulare bzw. umlaufende Strömung in dem Messabschnitt erzeugen.

Gemäß einer weiteren Ausführungsform bilden der Zuflussabschnitt, der Messabschnitt und der Abflussabschnitt gemeinsam ein, insbesondere gerades, Rohr. Zudem können der Zuflussabschnitt, der Messabschnitt und der Abflussabschnitt gemeinsam eine Länge von weniger als dem 1,5-fachen, bevorzugt von weniger als dem 1,2-fachen, des Rohrdurchmessers aufweisen. Durch die senkrechte Anordnung der Schallpfade und damit auch durch die senkrechte Anordnung der Transducer kann die Durchflussmessvorrichtung, wie erwähnt, besonders kurz und platzsparend ausgebildet werden. Üblicherweise sind Durchflussmessvorrichtungen deutlich länger und besitzen eine Länge von etwa dem dreifachen des Rohrdurchmessers. Aufgrund der deutlichen Verkürzung der Durchflussmessvorrichtung kann somit ein deutlicher Platzgewinn erzielt werden, wobei der gewonnene Platz wiederum sinnvoll genutzt werden kann. Beispielsweise kann vor dem Zuflussabschnitt ein Flow Conditioner angeordnet werden, um die Strömung vor dem Strömungsumlenkungsmittel zu homogenisieren.

Der Durchflussraum kann rohrförmig mit insbesondere kreisförmigem Querschnitt sein.

Das den Durchflussraum bildende Rohr ist bevorzugt fest und unbeweglich. Der kreisförmige Querschnitt kann nahezu überall in dem Durchflussraum vorhanden sein, mit Ausnahme beispielsweise der Anschlussstellen für die Transducer.

Gemäß einer weiteren Ausführungsform umfasst die Durchflussmessvorrichtung eine Auswerteeinheit, welche mit der Ultraschalleinrichtung gekoppelt ist und zum Durchführen einer Laufzeitdifferenzmessung (mittels der Ultraschalleinrichtung) und zum Bestimmen des Parameters ausgebildet ist. In der Auswerteeinheit kann ein effektiver Winkel hinterlegt sein, welcher den Winkel zwischen der abgelenkten Strömung und dem Schallpfad bzw. den Schallpfaden angibt. Wie oben erwähnt, kann der effektive Winkel z.B. experimentell ermittelt worden sein.

Der gemessene Parameter des Fluids kann die Laufzeit der Ultraschallwellen entlang des Schallpfads sein. Durch die Messung auf dem Hin- und auf dem Rückweg kann sich eine Laufzeitdifferenz ergeben. Hieraus kann dann zunächst die Strömungsgeschwindigkeit des Fluids entlang der Transportrichtung ermittelt werden. Dies kann insbesondere mit der Formel

$$v_p = \frac{L}{2 * \tan(\alpha)} \cdot \left( \frac{1}{t_{AB}} - \frac{1}{t_{BA}} \right)$$

erfolgen. Dabei ist $v_p$ die Fließgeschwindigkeit des Fluids entlang der Transportrichtung, $\alpha$ der Winkel zwischen dem abgelenkten Fluid und dem Schallpfad, L die Länge des Schallpfads (d.h. der Abstand zweier Transducer desselben Schallpfads), $t_{AB}$ die Laufzeit in der Hin-Richtung des Schallpfads und $t_{BA}$ die Laufzeit in der Rück-Richtung des Schallpfads.

Aus der Fließgeschwindigkeit ergibt sich dann durch Multiplikation mit der Querschnittsfläche (d.h. der Querschnittsfläche im Bereich des Schallpfads) das durch die Durchflussmessvorrichtung fließende Volumen pro Zeiteinheit.

Weiterhin betrifft die Erfindung ein Verfahren gemäß Anspruch 15.

Die Ausführungen zu der erfindungsgemäßen Durchflussmessvorrichtung gelten für das erfindungsgemäße Verfahren entsprechend. Dies gilt insbesondere hinsichtlich Vorteilen und Ausführungsformen. Überdies versteht es sich, dass sämtliche hierin genannten Merkmale und Ausführungsformen miteinander kombinierbar sind, sofern nicht explizit etwas Gegenteiliges angegeben ist. Dies gilt insbesondere für die Kombination der verschiedenen Varianten der Strömungsumlenkungsmittel.

Nachfolgend wird die Erfindung rein beispielhaft unter Bezugnahme auf die Zeichnungen beschrieben. Es zeigen:

Fig. 1    eine schematische Ansicht einer Durchflussmessvorrichtung;

Fig. 2    eine Ansicht eines Strömungsumlenkungsmittels sowie eines Strömungsrücklenkungsmittels, gesehen entlang der Transportrichtung;

Fig. 3    eine schematische perspektivische Ansicht des Strömungsumlenkungsmittels und des Strömungsrücklenkungsmittels sowie der Ultraschalleinrichtung;

Fig. 4    den Verlauf der Strömung durch die Durchflussmessvorrichtung;

Fig. 5    eine Durchflussmessvorrichtung in perspektivischer Ansicht;

Fig. 6    eine Ausführungsform der Strömungsumlenkungsmittel mit einmündenden Zuleitungen; und

Fig. 7    eine weitere Ausführungsform des Strömungsumlenkungsmittels umfassend eine Doppelkrümmung.

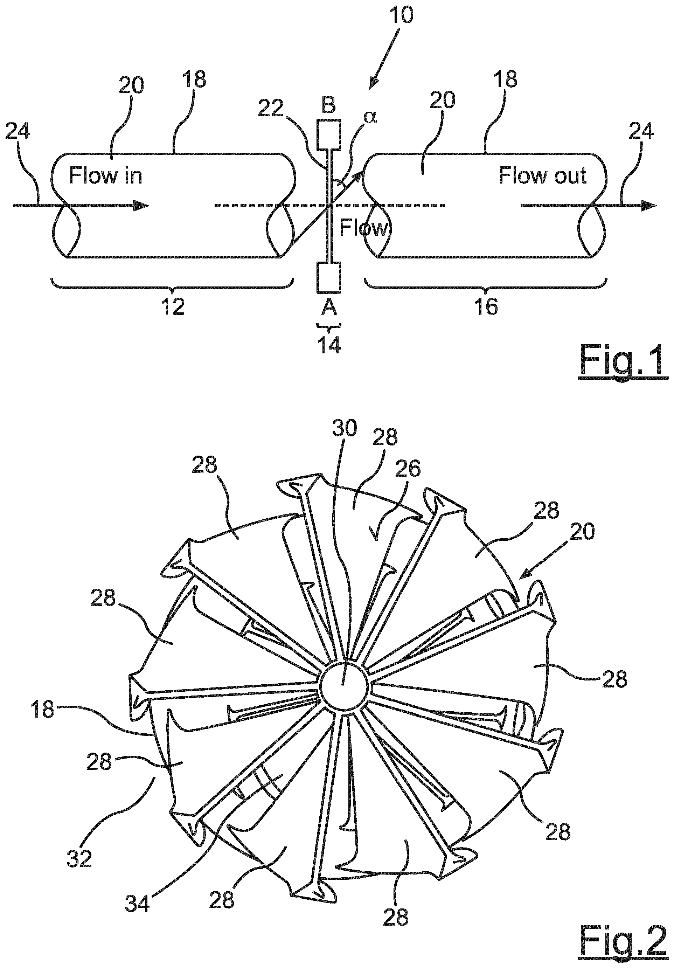

Fig. 1 zeigt schematisch eine Durchflussmessvorrichtung 10. Die Durchflussmessvorrichtung 10 umfasst einen Zuflussabschnitt 12, einen an den Zuflussabschnitt 12 anschließenden Messabschnitt 14 und einen an den Messabschnitt 14 anschließenden Abflussabschnitt 16. Diese Abschnitte sind durch ein durchgängiges Rohr 18 gebildet, welches einen Durchflussraum 20 definiert.

In dem Messabschnitt 14 sind zwei Ultraschall-Transducer A, B vorgesehen, die Ultraschallwellen zum jeweils anderen Transducer A, B übertragen. Der Ausbreitungsweg der Ultraschallwellen definiert dabei einen Schallpfad 22.

In den Zuflussabschnitt 12 strömt im Betrieb der Durchflussmessvorrichtung 10 ein Fluid F, beispielsweise Erdgas, entlang einer Transportrichtung 24 ein. Das Fluid F wird dann im Zuflussabschnitt 12 durch ein (in Fig. 1 nicht gezeigtes) Strömungsumlenkungsmittel abgelenkt, so dass die Strömung des Fluids F zumindest bereichsweise schräg zu der Transportrichtung 24 verläuft. Der schräge Verlauf ist durch einen Winkel $\alpha$ angegeben, welcher den Winkel zwischen dem Schallpfad 22 und dem Verlauf der abgelenkten Strömung definiert.

Aufgrund des schräg zum Schallpfad 22 fließenden Fluids F kann mittels der Transducer A, B ein Laufzeitunterschied gemessen werden, aus dem sich das durch die Durchflussmessvorrichtung 10 fließende Volumen pro Zeiteinheit ermitteln lässt.

In dem Abflussabschnitt 16 ist ein (ebenfalls in Fig. 1 nicht gezeigtes) Strömungsrücklenkungsmittel vorgesehen, welches den schrägen Verlauf der abgelenkten Strömung wieder in Richtung der Transportrichtung 24 umlenkt. Das Fluid F verlässt nach dem Umlenken durch das Strömungsrücklenkungsmittel die Durchflussmessvorrichtung 10.

Fig. 2 zeigt ein als Drallgenerator 26 ausgebildetes Strömungsumlenkungsmittel. Der Drallgenerator 26 umfasst neun Flügel 28, welche rotationssymmetrisch um einen zentralen Verbindungsabschnitt 30 herum angeordnet sind. Die Flügel 28 entspringen aus dem Verbindungsabschnitt 30 und erstrecken sich bis zu einer Wandung 32 des Rohrs 18 und gehen insbesondere in die Wandung 32 über.

In Fig. 2 ist zudem hinter dem Drallgenerator 26 ein weiterer Drallgenerator 34 teilweise zu erkennen, welcher als Strömungsrücklenkungsmittel dient. Die beiden Drallgeneratoren 26, 34 sind als Gleichteile aufgebaut, wobei der weitere Drallgenerator 34 derart in das Rohr 18 eingesetzt ist, dass er die Querströmung des abgelenkten Fluids F reduziert.

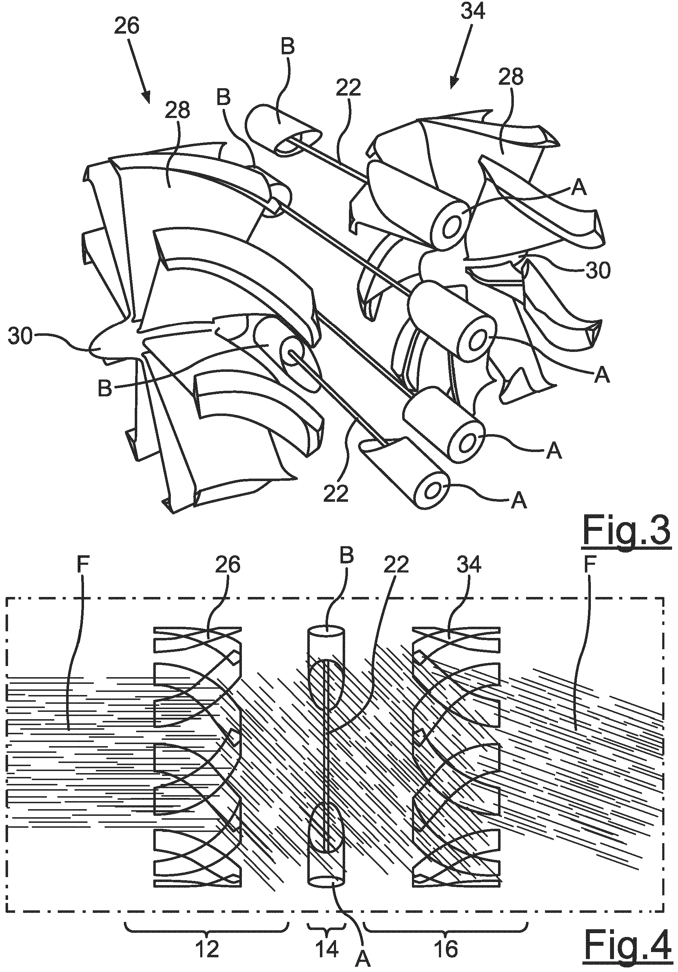

In den Fig. 3 und 4 sind die Drallgeneratoren 26, 34 perspektivisch und in einer Seitenansicht dargestellt. Wie in Fig. 3 ersichtlich, sind zwischen den Drallgeneratoren 26, 34 vier Paare von Transducern A, B angeordnet, die jeweils einen Schallpfad 22 zwischen sich definieren. Die Transducer A, B sind sämtlich in einer Ebene im Messabschnitt 14 angeordnet, auf welche die Transportrichtung 24 eine Normale bildet.

In Fig. 4 ist die sich ausbildende Strömung des Fluids F dargestellt. Es ist zu erkennen, dass das homogen und geradlinig einfließende Fluid F von dem Drallgenerator 26 in eine Richtung schräg zu der Transportrichtung 24 abgelenkt wird und in dieser abgelenkten Richtung auch durch die Schallpfade 22 fließt, wodurch eine Messung ermöglicht wird. Der weitere Drallgenerator 34 reduziert dann die Querkomponente der Strömung, so dass die Strömung mit reduzierter Querkomponente durch den Ablaufabschnitt 16 fließt und diesen so auch wieder verlässt.

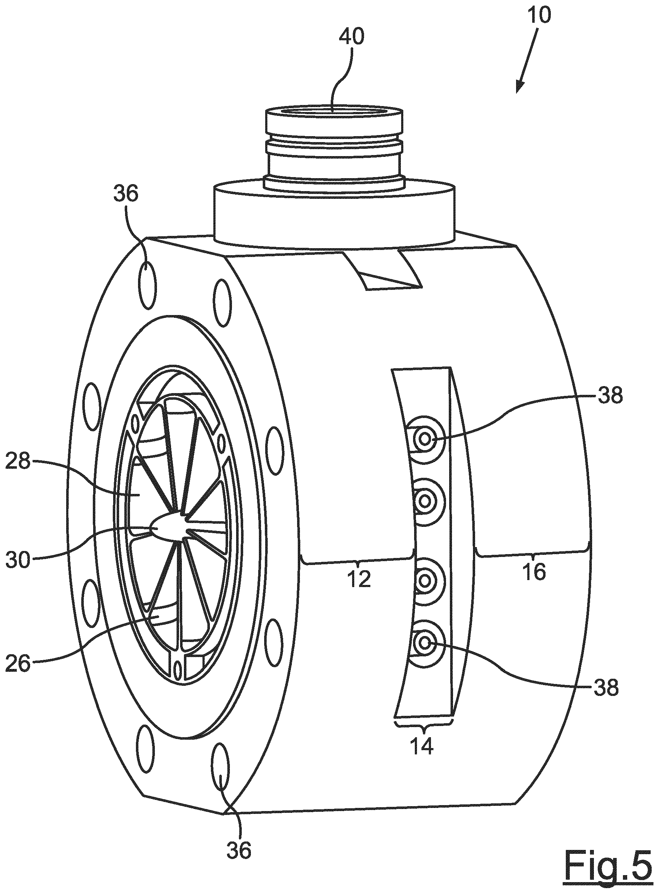

Fig. 5 zeigt eine Durchflussmessvorrichtung 10 von außen in perspektivischer Ansicht. Die Durchflussmessvorrichtung 10 umfasst zwei Stirnseiten, von welchen eine in Fig. 5 sichtbar ist. In die Stirnseiten sind Bohrlöcher 36 eingebracht, welche ein Verschrauben mit einer (nicht gezeigten) Rohrleitung ermöglichen. Direkt in der von der Stirnseite gebildeten Ebene befindet sich zudem der Drallgenerator 26, so dass der Drallgenerator 26 am Einlass der Durchflussmessvorrichtung 10 angeordnet ist. Mittig in der Durchflussmessvorrichtung 10 befindet sich der Messabschnitt 14, wobei in Fig. 5 elektrische Anschlüsse 38 für die Transducer A, B zu sehen sind, welche aus einer Seitenwand der Durchflussmessvorrichtung 10 herausragen.

Auf einer Oberseite der Durchflussmessvorrichtung 10 ist ein Befestigungsflansch 40 für eine (nicht gezeigte) Auswerteelektronik vorgesehen.

Die Durchflussmessvorrichtung 10 ist symmetrisch aufgebaut, so dass das Durchfließen mit dem zu messenden Fluid F bidirektional erfolgen kann. Dementsprechend kann der weitere Drallgenerator 34 bündig in der in Fig. 5 nicht zu sehenden Stirnseite angeordnet sein.

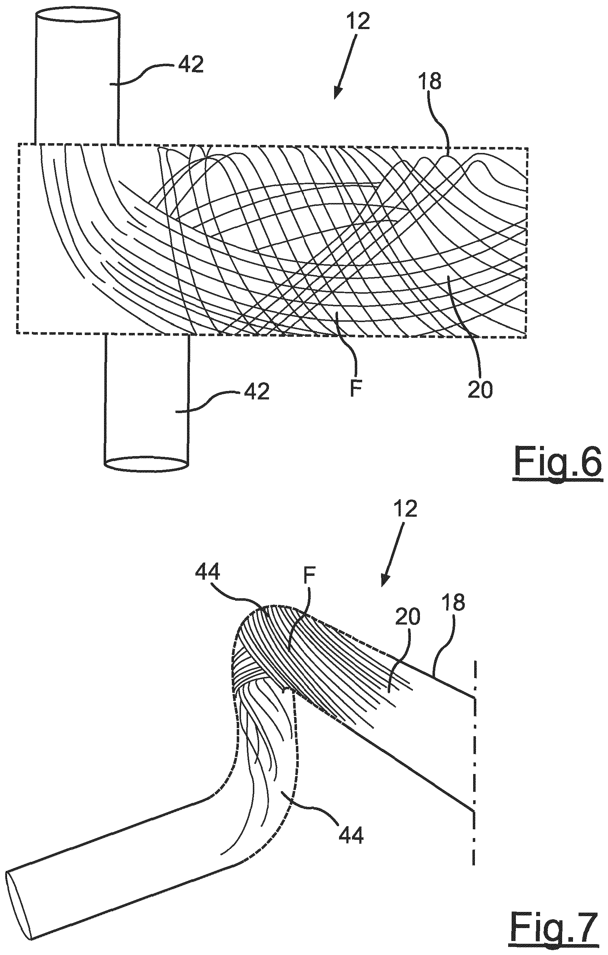

Die Fig. 6 und 7 zeigen noch zwei weitere Ausführungsformen für das Strömungsumlenkungsmittel. Gemäß Fig. 6 umfasst das Strömungsumlenkungsmittel zwei tangential in das Rohr 18 einmündende Zuleitungen 42. Die Zuleitungen 42 verlaufen dabei vor dem Einmünden im rechten Winkel zum Verlauf des Rohrs 18. Fig. 6 zeigt dabei den Verlauf der Strömung, wobei zu erkennen ist, dass die Strömung wiederum eine Komponente quer zur Transportrichtung 24 (d.h. zur Verlaufsrichtung des Rohrs 18) erhält.

Gemäß Fig. 7 umfasst das Strömungsumlenkungsmittel eine Doppelkrümmung mit zwei Krümmungen 44 um jeweils 90°. Auch in Fig. 7 ist wiederum die resultierende Strömung gezeigt. Es ist zu erkennen, dass auch gemäß dieser Ausführungsform das Strömungsumlenkungsmittel die Strömung so ablenkt, dass eine Art Drall bzw. eine Ablenkung quer zur Transportrichtung 24 erfolgt. Durch diese Ablenkung kann dann mit den senkrecht auf der Transportrichtung 24 stehenden Schallpfaden 22 eine sinnvolle Messung des Laufzeitunterschieds erfolgen.

Wie insbesondere in Fig. 5 ersichtlich ist, kann die Durchflussmessvorrichtung 10 sehr kompakt ausgebildet werden, da für die Transducer A, B nur eine sehr geringe Rohrlänge in der Durchflussmessvorrichtung 10 vorgesehen sein muss. Trotz der dafür nötigen Ablenkung des Fluids F hat sich in der Praxis gezeigt, dass sehr genaue Messungen der Fließgeschwindigkeit und damit des durch die Messvorrichtung 10 fließenden Volumens möglich sind.

Bezugszeichenliste

| | |
|---|---|
| 10 | Durchflussmessvorrichtung |
| 12 | Zuflussabschnitt |
| 14 | Messabschnitt |
| 16 | Abflussabschnitt |
| 18 | Rohr |
| 20 | Durchflussraum |
| 22 | Schallpfad |
| 24 | Transportrichtung |
| 26 | Drallgenerator |
| 28 | Flügel |
| 30 | Verbindungsabschnitt |
| 32 | Wandung |
| 34 | weiterer Drallgenerator |
| 36 | Bohrloch |
| 38 | Anschluss |
| 40 | Befestigungsflansch |
| 42 | Zuleitung |
| 44 | Krümmung |
| A, B | Transducer |
| F | Fluid |
| $\alpha$ | Winkel |

**Patentansprüche**

1. Durchflussmessvorrichtung (10) zum Messen eines Parameters, insbesondere zur Ermittlung einer Durchflussmenge, einer aus einem Fluid (F) gebildeten Strömung, wobei die Durchflussmessvorrichtung (10) einen Durchflussraum (20) mit einem Zuflussabschnitt (12) und einem Abflussabschnitt (16) sowie einem zwischen dem Zuflussabschnitt (12) und dem Abflussabschnitt (16) angeordneten Messabschnitt (14) umfasst, wobei der Messabschnitt (14) eine Transportrichtung (24) definiert, wobei in dem Messabschnitt (14) zumindest eine Ultraschalleinrichtung (A, B) zum Aussenden und/oder Empfangen von Ultraschallwellen angeordnet ist, und

ein bevorzugt zumindest in dem Zuflussabschnitt (12) angeordnetes Strömungsumlenkungsmittel (26, 42, 44), welches ausgebildet ist, die Strömung derart umzulenken, dass die Strömung im Messabschnitt (14) zumindest bereichsweise schräg zu der Transportrichtung (24) verläuft,

**dadurch gekennzeichnet , dass**

die Ultraschalleinrichtung (A, B) ausgebildet ist, die Ultraschallwellen in mehrere zumindest im Wesentlichen zu der Transportrichtung (24) senkrechte Schallpfade (22) durch das Fluid (F) auszusenden und/oder die Ultraschallwellen aus mehreren zumindest im Wesentlichen zu der Transportrichtung (24) senkrechten Schallpfaden (22) aus dem Fluid (F) zu empfangen, wobei mehrere zueinander parallele Schallpfade (22) vorhanden sind, wobei Transducer (A, B) an gegenüberliegenden Enden der Schallpfade angeordnet sind.

2. Durchflussmessvorrichtung (10) nach Anspruch 1, wobei zumindest einer der Schallpfade (22) oder alle Schallpfade (22) außermittig in dem Messabschnitt (14) verläuft/verlaufen.

3. Durchflussmessvorrichtung (10) nach Anspruch 1 oder 2,
wobei zumindest zwei senkrecht zueinander verlaufende Schallpfade (22) vorhanden sind.

4. Durchflussmessvorrichtung (10) nach einem der vorstehenden Ansprüche, wobei das Strömungsumlenkungsmittel (26, 42, 44) in dem Durchflussraum (20) angeordnete Umlenkflächen (28) aufweist.

5. Durchflussmessvorrichtung (10) nach einem der vorstehenden Ansprüche, wobei das Strömungsumlenkungsmittel zumindest einen Drallgenerator (26) mit mehreren Flügeln (28) aufweist, welche sich von einem zentralen Verbindungsabschnitt (30) zur Wand des Durchflussraums (20) erstrecken.

6. Durchflussmessvorrichtung (10) nach Anspruch 5, wobei die Flügel (28) entlang der Transportrichtung (24) gesehen an derselben Position beginnen und an derselben Position enden, wobei die Flügel (28) bevorzugt jeweils eine sich entsprechende Geometrie besitzen.

7. Durchflussmessvorrichtung (10) nach einem der vorstehenden Ansprüche, wobei das Strömungsumlenkungsmittel (26, 42, 44) den Durchflussquerschnitt an seiner Position um weniger als 15%, bevorzugt um weniger als 10% reduziert.

8. Durchflussmessvorrichtung (10) nach einem der vorstehenden Ansprüche, wobei das Strömungsumlenkungsmittel (26, 42, 44) ausgebildet ist, die Strömung derart umzulenken, dass die umgelenkte Strömung achsensymmetrisch um eine entlang der Transportrichtung (24) verlaufende Achse ist.

9. Durchflussmessvorrichtung (10) nach einem der vorstehenden Ansprüche, wobei ein Strömungsrücklenkungsmittel (34), bevorzugt in dem Abflussabschnitt (16), angeordnet ist, welches ausgebildet ist, die abgelenkte Strömung nochmals so abzulenken, dass die Strömung parallel zu der Transportrichtung (24) verläuft.

10. Durchflussmessvorrichtung (10) nach Anspruch 9, wobei das Strömungsrücklenkungsmittel (34) dem Strömungsumlenkungsmittel (26, 42, 44) entspricht, wobei das Strömungsrücklenkungsmittel (34) und das Strömungsumlenkungsmittel (26, 42, 44) bevorzugt Gleichteile sind.

11. Durchflussmessvorrichtung (10) nach einem der vorstehenden Ansprüche, wobei die Durchflussmessvorrichtung (10) zumindest bezüglich der mit dem Fluid (F) in Kontakt kommenden Komponenten symmetrisch ausgebildet ist.

12. Durchflussmessvorrichtung (10) nach einem der vorstehenden Ansprüche, wobei das Strömungsumlenkungsmittel zumindest eine schräg oder quer zur Transportrichtung (24) in den Durchflussraum (20) mündende Zuleitung (42) umfasst, durch welche ein Fluid (F) in den Durchflussraum (20) einbringbar ist.

13. Durchflussmessvorrichtung (10) nach einem der vorstehenden Ansprüche, wobei der Zuflussabschnitt (12), der Messabschnitt (14) und der Abflussabschnitt (16) gemeinsam ein, insbesondere gerades, Rohr (18) bilden und gemeinsam eine Länge von weniger als dem 1,5-fachen, bevorzugt von weniger als dem 1,2-fachen, des Rohrdurchmessers aufweisen.

14. Durchflussmessvorrichtung (10) nach einem der vorstehenden Ansprüche, wobei die Durchflussmessvorrichtung (10) eine Auswerteeinheit umfasst, welche mit der Ultraschalleinrichtung (A, B) gekoppelt ist und zum Durchführen einer Laufzeitdifferenzmessung und zum Bestimmen des Parameters ausgebildet ist.

15. Verfahren zum Messen eines Parameters, insbesondere zur Ermittlung einer Durchflussmenge, einer aus einem Fluid (F) gebildeten Strömung, wobei das Fluid (F) in einer Transportrichtung (24) fließt, und

die Strömung mittels eines Strömungsablenkungsmittels (26, 42, 44) derart umgelenkt wird, dass die Strömung in einem Messabschnitt (14) zumindest bereichsweise schräg zu der Transportrichtung (24) verläuft, **dadurch gekennzeichnet, dass** Ultraschallwellen in mehrere zumindest im Wesentlichen zu der Transportrichtung (24) senkrechte Schallpfade (22) durch das Fluid (F) ausgesendet und/oder aus mehreren zumindest im Wesentlichen zu der Transportrichtung (24) senkrechten Schallpfaden (22) aus dem Fluid (F) empfangen werden, wobei mehrere zueinander parallele Schallpfade (22) vorhanden sind, wobei Transducer (A, B) an gegenüberliegenden Enden der Schallpfade angeordnet sind.

**Claims**

1. A flow measurement apparatus (10) for measuring a parameter, in particular for determining a flow rate, of a flow formed from a fluid (F), wherein the flow measurement apparatus (10) comprises a flow chamber (20) having an inflow section (12) and an outflow section (16) and a measurement section (14) arranged between the inflow section (12) and the outflow section (16), wherein the measurement section (14) defines a transport direction (24), wherein at least one ultrasonic device (A, B) for transmitting and/or receiving ultrasonic waves is arranged in the measurement section (14), and

a flow deflection device (26, 42, 44) is preferably arranged at least in the inflow section (12) and is configured to deflect the flow such that the flow extends at least regionally obliquely to the transport direction (24) in the measurement section (14), **characterized in that** the ultrasonic device (A, B) is configured to transmit the ultrasonic waves through the fluid (F) in a plurality of sound paths (22) which are at least substantially perpendicular to the transport direction (24) and/or to receive the ultrasonic waves from the fluid (F) from a plurality of sound paths (22) which are at least substantially perpendicular to the transport direction (24), wherein a plurality of mutually parallel sound paths (22) are present, wherein transducers (A, B) are arranged at oppositely disposed ends of the sound paths.

2. A flow measurement apparatus (10) according to claim 1, wherein at least one of the sound paths (22) or all the sound paths (22) extends/extend off-center in the measurement section (14).

3. A flow measurement apparatus (10) according to claim 1 or 2, wherein at least two sound paths (22) extending perpendicular to one another are present.

4. A flow measurement apparatus (10) according to any one of the preceding claims, wherein the flow deflection device (26, 42, 44) has deflection surfaces (28) arranged in the flow chamber (20).

5. A flow measurement apparatus (10) according to any one of the preceding claims, wherein the flow deflection device has at least one swirl generator (26) comprising a plurality of blades (28) which extend from a central connection section (30) toward a wall of the flow chamber (20).

6. A flow measurement apparatus (10) according to claim 5, wherein the blades (28) start at the same position and end at the same position, viewed along the transport direction (24), wherein the blades (28) preferably each have a corresponding geometry.

7. A flow measurement apparatus (10) according to any one of the preceding claims, wherein the flow deflection device (26, 42, 44) reduces the flow cross-section at its position by less than 15%, preferably by less than 10%.

8. A flow measurement apparatus (10) according to any one of the preceding claims, wherein the flow deflection device (26, 42, 44) is configured to deflect the flow such that the deflected flow is axially symmetrical about an axis extending along the transport direction (24).

9. A flow measurement apparatus (10) according to any one of the preceding claims, wherein a flow return device (34) is preferably arranged in the outflow section (16) and is configured to deflect the deflected flow again such that the flow extends parallel to the transport direction (24).

10. A flow measurement apparatus (10) according to claim 9, wherein the flow return device (34) corresponds to the flow deflection device (26, 42, 44), wherein the flow return device (34) and the flow deflection device (26, 42, 44) are preferably identical parts.

**11.** A flow measurement apparatus (10) according to any one of the preceding claims, wherein the flow measurement apparatus (10) is symmetrical at least with respect to the component that comes into contact with the fluid (F).

**12.** A flow measurement apparatus (10) according to any one of the preceding claims, wherein the flow deflection device comprises at least one supply line (42) which opens into the flow chamber (20) obliquely or transversely to the transport direction (24) and through which a fluid (F) can be introduced into the flow chamber (20).

**13.** A flow measurement apparatus (10) according to any one of the preceding claims, wherein the inflow section (12), the measurement section (14) and the outflow section (16) together form a pipe (18), in particular a straight pipe, and together have a length of less than 1.5 times, preferably of less than 1.2 times, the pipe diameter.

**14.** A flow measurement apparatus (10) according to any one of the preceding claims, wherein the flow measurement apparatus (10) comprises an evaluation unit which is coupled to the ultrasonic device (A, B) and which is configured to carry out a transit time difference measurement and to determine the parameter.

**15.** A method for measuring a parameter, in particular for determining a flow rate, of a flow formed from a fluid (F), wherein the fluid (F) flows in a transport direction (24), and

the flow is deflected by means of a flow deflection device (26, 42, 44) such that the flow extends at least regionally obliquely to the transport direction (24) in a measurement section (14),
**characterized in that**
ultrasonic waves are transmitted through the fluid (F) in a plurality of sound paths (22) which are at least substantially perpendicular to the transport direction (24) and/or are received from the fluid (F) from a plurality of sound paths (22) which are at least substantially perpendicular to the transport direction (24), wherein a plurality of mutually parallel sound paths (22) are present, wherein transducers (A, B) are arranged at oppositely disposed ends of the sound paths.

**Revendications**

**1.** Dispositif de mesure de débit (10) pour mesurer un paramètre, en particulier pour déterminer une quantité du débit d'un flux formé d'un fluide (F), le dispositif de mesure de débit (10) comprenant un espace d'écoulement (20) ayant une portion d'entrée (12) et une portion de sortie (16) ainsi qu'une portion de mesure (14) disposée entre la portion d'entrée (12) et la portion de sortie (16), la portion de mesure (14) définissant une direction de transport (24), au moins un dispositif à ultrasons (A, B) destiné à émettre et/ou à recevoir des ondes ultrasonores étant disposé dans la portion de mesure (14), et comprenant un moyen de déviation de flux (26, 42, 44) disposé de préférence au moins dans la portion d'entrée (12), lequel est conçu pour dévier le flux de telle sorte que le flux dans la portion de mesure (14) s'écoule au moins localement en oblique par rapport à la direction de transport (24), **caractérisé en ce que** le dispositif à ultrasons (A, B) est conçu pour émettre les ondes ultrasonores à travers le fluide (F) sur plusieurs chemins sonores (22) au moins sensiblement perpendiculaires à la direction de transport (24) et/ou pour recevoir les ondes ultrasonores depuis le fluide (F) sur plusieurs chemins sonores (22) au moins sensiblement perpendiculaires à la direction de transport (24), sachant qu'il existe plusieurs chemins sonores (22) parallèles entre eux et que des transducteurs (A, B) sont disposés à des extrémités opposées des chemins sonores.

**2.** Dispositif de mesure de débit (10) selon la revendication 1, dans lequel l'un au moins des chemins sonores (22) ou tous les chemins sonores (22) s'étend(ent) de manière excentrée dans la portion de mesure (14).

**3.** Dispositif de mesure de débit (10) selon la revendication 1 ou 2, dans lequel sont prévus au moins deux chemins sonores (22) perpendiculaires entre eux.

**4.** Dispositif de mesure de débit (10) selon l'une des revendications précédentes, dans lequel le moyen de déviation de flux (26, 42, 44) présente des surfaces de déviation (28) disposées dans l'espace d'écoulement (20).

**5.** Dispositif de mesure de débit (10) selon l'une des revendications précédentes, dans lequel le moyen de déviation de flux comprend au moins un générateur de tourbillon (26) comportant une pluralité d'ailettes (28) qui s'étendent depuis une portion centrale de liaison (30) vers la paroi de l'espace d'écoulement (20).

**6.** Dispositif de mesure de débit (10) selon la revendication 5, dans lequel les ailettes (28) partent de la même position et se terminent à la même position, vues le long de la direction de transport (24), les ailettes (28) ayant de préférence respectivement des géométries qui se correspondent.

7. Dispositif de mesure de débit (10) selon l'une des revendications précédentes, dans lequel le moyen de déviation de flux (26, 42, 44) réduit, à sa position, la section transversale d'écoulement de moins de 15 %, de préférence de moins de 10 %.

8. Dispositif de mesure de débit (10) selon l'une des revendications précédentes, dans lequel le moyen de déviation de flux (26, 42, 44) est conçu pour dévier le flux de telle sorte que le flux dévié soit axisymétrique autour d'un axe s'étendant le long de la direction de transport (24).

9. Dispositif de mesure de débit (10) selon l'une des revendications précédentes, dans lequel est prévu un moyen de renvoi de flux (34), disposé de préférence dans la portion de sortie (16), qui est conçu pour dévier à nouveau le flux dévié, de telle sorte que le flux soit parallèle à la direction de transport (24).

10. Dispositif de mesure de débit (10) selon la revendication 9, dans lequel le moyen de renvoi du flux (34) correspond au moyen de déviation de flux (26, 42, 44), le moyen de renvoi de flux (34) et le moyen de déviation de flux (26, 42, 44) étant de préférence des pièces identiques.

11. Dispositif de mesure de débit (10) selon l'une des revendications précédentes, dans lequel le dispositif de mesure de débit (10) est symétrique au moins par rapport aux composants qui entrent en contact avec le fluide (F).

12. Dispositif de mesure de débit (10) selon l'une des revendications précédentes, dans lequel le moyen de déviation de flux comprend au moins une conduite d'alimentation (42) qui débouche dans l'espace d'écoulement (20) de manière oblique ou transversale par rapport à la direction de transport (24) et qui permet d'introduire un fluide (F) dans l'espace d'écoulement (20).

13. Dispositif de mesure de débit (10) selon l'une des revendications précédentes, dans lequel la portion d'entrée (12), la portion de mesure (14) et la portion de sortie (16) forment ensemble un tube (18), en particulier droit, et présentent ensemble une longueur inférieure à 1,5 fois, de préférence inférieure à 1,2 fois, le diamètre du tube.

14. Dispositif de mesure de débit (10) selon l'une des revendications précédentes,

dans lequel le dispositif de mesure de débit (10) comprend une unité d'évaluation qui est couplée au dispositif à ultrasons (A, B) et qui est conçue pour effectuer une mesure de la différence des temps de transit et pour déterminer le paramètre.

15. Procédé pour mesurer un paramètre, en particulier pour déterminer une quantité du débit d'un flux formé d'un fluide (F),

le fluide (F) s'écoulant dans une direction de transport (24), et le flux étant dévié à l'aide d'un moyen de déviation de flux (26, 42, 44) de telle sorte que le flux dans une portion de mesure (14) s'écoule au moins localement en oblique par rapport à la direction de transport (24), **caractérisé en ce que** des ondes ultrasonores sont émises à travers le fluide (F) sur plusieurs chemins sonores (22) au moins sensiblement perpendiculaires à la direction de transport (24) et/ou sont reçues depuis le fluide (F) sur plusieurs chemins sonores (22) au moins sensiblement perpendiculaires à la direction de transport (24), sachant qu'il existe plusieurs chemins sonores (22) parallèles entre eux et que des transducteurs (A, B) sont disposés à des extrémités opposées des chemins sonores.

Fig.1

Fig.2

Fig.3

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112017006535 T5
- US 5136882 A
- CN 102322906 A
- US 10845224 B2